Europäisches Patentamt

European Patent Office

Office européen des brevets

(11) Publication number: **0 366 620**

**A1**

## (12) EUROPEAN PATENT APPLICATION

(21) Application number: **89830450.6**

(22) Date of filing: **17.10.89**

(51) Int. Cl.⁵: **F02D 11/10 , H02P 8/00**

(30) Priority: **25.10.88 IT 6795588**

(43) Date of publication of application:
**02.05.90 Bulletin 90/18**

(84) Designated Contracting States:
**AT BE CH DE ES FR GB GR IT LI LU NL SE**

(71) Applicant: **MARELLI AUTRONICA S.p.A.**
**Piazza Sant'Ambrogio, 6**
**I-20123 Milano(IT)**

(72) Inventor: **Calfus, Marco**
**Strada Superga 298**
**I-10132 Torino(IT)**
Inventor: **Pautasso, Luciano**
**Via Torino, 213**
**I-10042 Nichelino (Torino)(IT)**

(74) Representative: **Quinterno, Giuseppe et al**
**c/o Jacobacci-Casetta & Perani S.p.A. Via**
**Alfieri, 17**
**I-10121 Torino(IT)**

(54) **A circuit for controlling a direct-current motor.**

(57) The circuit enables a direct-current motor (M) to be controlled by means of a square-wave signal (S) whose duty cycle is variable so that the sign of its variations from a predetermined value (50%) are indicative of the value and the sign of the desired rate of rotation of the motor (M).

The circuit comprises:

an input terminal (i) for the control signal (S),

an integrator circuit (I) connected to the input terminal (i),

a comparator circuit (F) which provides an enabling output signal when the amplitude of the signal provided by the integrator circuit (I) is substantially different from the value which corresponds to the predetermined value (50%) of the duty cycle of the control signal (S), and

a circuit (E) for controlling the current supply to the motor (M) which has at least one control input (e) connected to the input terminal (i) and enabling input (e₁) connected to the output of the comparator circuit (F).

FIG. 4

## A circuit for controlling a direct-current motor

The present invention relates to a circuit for controlling a direct-current motor, particularly for the control of a throttle valve in an air-intake duct of an internal combustion engine with spark ignition, for controlling the idling speed of the engine.

Known devices for controlling the idling speed of an internal combustion engine are based on the closed-loop control of the quantity of air supplied to the cylinders.

The control of the quantity of air supplied to a cylinder is achieved, for example, with the use of a solenoid valve situated in a by-pass duct associated with a throttle valve in an air-intake duct. The solenoid valve is operated by means of a square-wave signal with a variable duty cycle generated by an electronic control unit on the basis of certain pieces of information, such as, for example, the rate of rotation of the engine, the engine temperature, the battery voltage, etc., provided by corresponding sensors.

In other systems for controlling the idling speed, the adjustment of the quantity of air supplied is achieved by acting on the throttle valve itself, which, in this case, does not have an associated by-pass duct. For this purpose, the rest position of the throttle valve at the idling speed is controlled by means of an electric motor, for example, of the direct current type. The position of the throttle valve at a particular time is detected, for example, by means of a rotary potentiometer. The motor is driven by an electronic control unit on the basis of the signals provided by the potentiometer associated with the throttle valve and by sensors which detect the values assumed by some variables such as, once again, the rate of rotation of the engine, the battery voltage, etc.

The electronic control units used in the two different types of idling-speed control systems described above have quite different characteristics, given the quite different characteristics of the actuators used.

Since, as stated above, the control units for the systems with by-pass ducts and associated solenoid valves are arranged to provide the solenoid valve with a control signal with a variable duty cycle, one wonders whether a signal of this type could drive the electric motor for controlling the rest position of the throttle valve in a regulation system which controls the throttle valve. This possibility would actually be extremely interesting, since it would enable the use of basically an identical type of electronic control unit (that is, a unit having identical hardware and differing only at the software level) for driving the two types of actuator used in the two different control systems described above.

In fact, in order to control an electric motor, it is necessary to be able to determine the absolute value and the sign of its speed. This information can also be provided by a square-wave signal with a variable duty cycle. Indeed, if a duty cycle of 50% is associated with the stationary condition of the engine (a rate of rotation equal to 0), then the magnitudes and signs of the variations of the duty cycle from 50% can indicate the value and the sign of the desired rate of rotation of the motor.

Once it has been established that the information concerning the value and the sign of the desired rate of rotation of the electric motor can be associated in this way with a square-wave signal with a variable duty cycle, it is necessary, in order to use an electronic unit of the type used for systems with by-pass ducts and associated solenoid valves in a regulation system which controls the rest position of the throttle valve, to have a circuit available which, having received the variable-duty-cycle signal containing the above information, is then able to drive the motor associated with the throttle valve in the desired manner.

The object of the present invention, therefore, is to produce a circuit for controlling a direct-current motor by means of a square-wave signal whose duty cycle is variable such that the magnitude and the sign of its variations from a predetermined value are indicative of the value of the sign of the desired rate of rotation of the motor.

This object is achieved according to the invention by means of a circuit characterised in that it comprises:

an input terminal for the control signal with a variable duty cycle,

an integrator circuit connected to the input terminal,

a comparator circuit for providing an enabling output signal when the amplitude of the signal provided by the integrator circuit is substantially different from the value which corresponds to the predetermined value of the duty cycle of the control signal, and

a circuit for controlling the current supply to the motor, which has at least one control input connected to the input terminal and an enabling, input connected to the output of the comparator circuit, and is adapted to supply the motor with a current which flows in one direction or in the opposite direction when the signal provided by the at least one control input is at a high level or at a low level.

Further characteristics and advantages of the present invention will become clear from the detailed description which follows with reference to the appended drawings, provided by way of non-limiting example, in which:

Figure 1 is a diagram of a system for controlling the idling speed of an internal combustion engine, of the type which controls the rest position of the throttle valve, including a circuit according to the present invention,

Figure 2 shows an example of the trace of a square-wave signal with a variable duty cycle usable for controlling the circuit according to the invention,

Figure 3 is a block diagram which shows the structure of a control circuit according to the invention, and

Figure 4 is a detailed electrical diagram of one embodiment of the circuit of Figure 3.

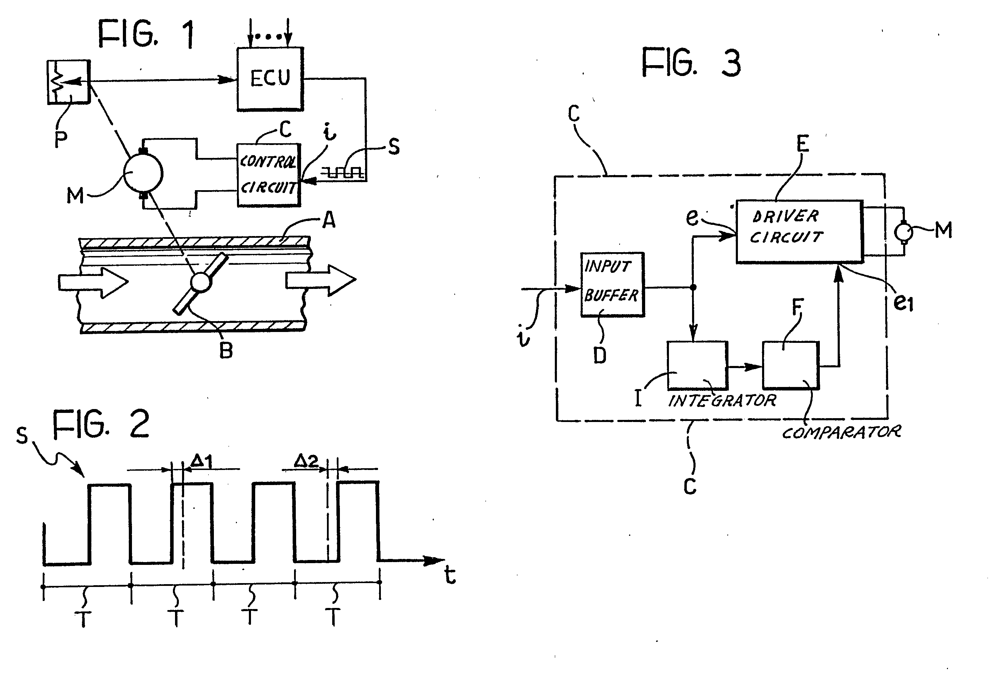

With reference to Figure 1, an air-intake duct of an internal combustion engine with spark ignition is indicated A. The air coming from a filter passes through this air duct towards the engine, in the direction of the arrows shown.

The duct A is provided with a throttle valve, indicated B. The rest position of this valve, for the idling speed is controlled by a direct-current motor, indicated M, driven by a control circuit C. The circuit has an input i to which an electronic control unit ECU supplies a square-wave control signal S whose duty cycle is variable such that the magnitude and the sign of its variations from 50% are indicative of the value and the sign of the desired rate of rotation of the motor M. Figure 2 shows an illustrative portion of the signal S which has a period indicated T. The first period shown has a duty cycle at 50% and corresponds to the motor M being stationary (rate of rotation equal to $\neq$ 0). In the second period shown, the duty cycle is greater than 50% and the difference $\Delta_1$ between this value of the duty cycle and 50% is indicative of the absolute value and the sign of the desired rate of rotation of the motor.

In the third period shown, the signal S once again has a duty cycle of 50%.

Finally, in the fourth period shown, the duty cycle is less than 50% and the variation $\Delta_2$ from 50% again indicates the value and the sign of the desired rate of rotation of the motor M.

The signal S is generated by the unit ECU on the basis of the signals supplied thereto by a plurality of sensors (not illustrated) for detecting the values assumed by some variables, such as the rate of rotation of the engine, the engine temperature, the battery voltage, etc. The unit ECU also receives a signal from a position sensor P associated with the throttle valve B. In the embodiment illustrated, this sensor is constituted by a rotary potentiometer.

The control system shown in Figure 1 is of the closed-loop type.

The control circuit C conveniently has the structure shown in Figure 3 and includes an input buffer circuit D the output of which is connected to the input of an integrator I and to the input e of a driver circuit E. The motor M is connected between two output terminals of this circuit.

The output of the integrator circuit I is connected to the input of a comparator circuit F. This circuit is arranged to provide an enabling output signal when the amplitude of the signal provided to it by the integrator circuit I is substantially different from 0, that is, from the value which corresponds to the integral of the signal S in the conditions in which the duty cycle is 50%. The output of the comparator circuit F is connected to an enabling input $e_1$ of the driver circuit E. The latter circuit, as will become clearer from the the following, is arranged to supply to the motor M with a current which flows in one direction or in the opposite direction when the signal provided at the input e is at a high level or at a low level. This is of course on the condition that the enabling signal provided by the comparator circuit F is present at the input $e_1$.

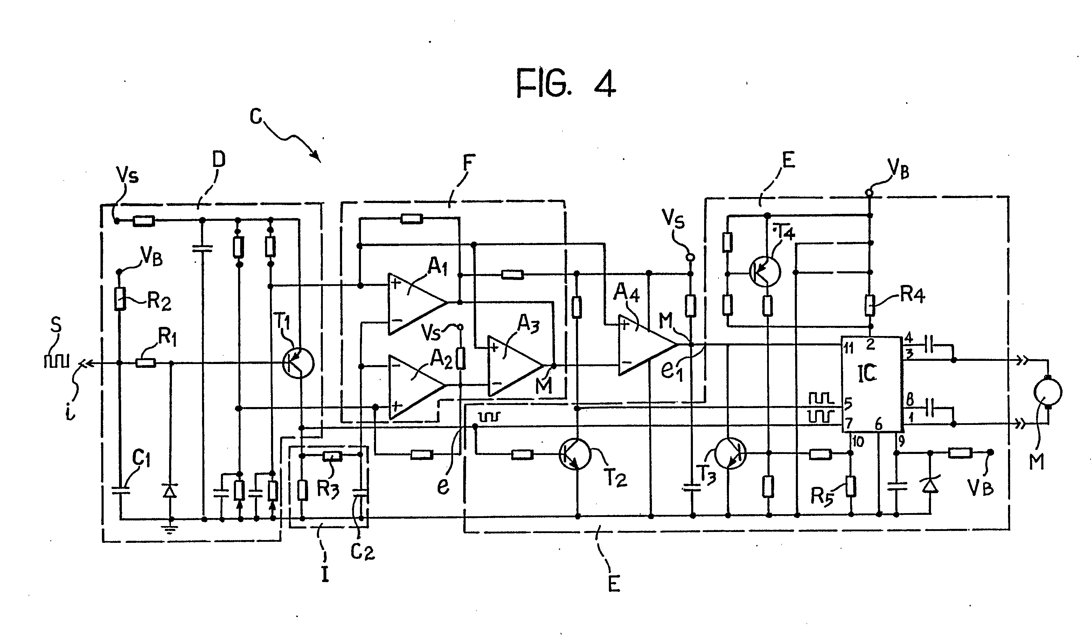

The embodiment shown in Figure 4 will now be described.

In this drawing, the direct voltage supplied by a non-stabilised supply source, for example, the battery of the motor vehicle, is indicated $V_B$, whilst the voltage delivered by a stabilised direct-voltage supply of, for example, 5V is indicated $V_s$.

In the embodiment of Figure 4, the input buffer circuit D includes a pnp-type transistor $T_1$ whose base is connected to the input terminal i through a resistor $R_1$. A resistor $R_2$ is arranged between the terminal i and the voltage supply $V_B$. A capacitor $C_1$ is connected between the input terminal i and earth.

The output of the input buffer circuit D is constituted by the collector of $T_1$, and is connected to a passive integrator circuit including a resistor $R_3$ and a capacitor $C_2$.

The comparator circuit F includes two inverting threshold comparators formed with the use of two operational amplifiers $A_1$ and $A_2$. These comparators compare the signal provided by the integrator circuit I with two different threshold voltages, the higher of which is that associated with $A_1$. The output of $A_2$ is connected to the inverting input of a further operational amplifier $A_3$ which acts as an inverter, whilst the output of $A_1$ is connected at M to the output of $A_3$ (a wired-OR-type connection). The output of $A_3$ constitutes the output of the comparator circuit F and provides an enabling signal when the output signal provided by the integrator I has an amplitude greater than the threshold associated with $A_1$ or less than the threshold associated with $A_2$.

The output of $A_3$ is coupled to the enabling

input $e_1$ of the driver circuit E by means of a further operational amplifier $A_4$ which acts as an impedance de-coupler.

The driver circuit E includes a npn-type transistor $T_2$ having its base connected to the collector of $T_1$ and its collector connected to an input pin of an integrated circuit IC. This integrated circuit essentially comprises a driving circuit of the full-bridge type (a full-bridge driver) and is conveniently constituted by the circuit produced and marketed by the company SGS under the trade reference L6203. In Figure 4, the pins of IC have been given the characteristic reference numerals of the commercial circuit mentioned.

The integrator circuit IC has an input pin (number 7) which is connected directly to the collector of $T_1$. The motor M is connected between the pins 1 and 3 of the integrated circuit. The pins 2 and 10, however, are connected to the voltage supply $V_B$ and to earth, through a resistor $R_4$ and a resistor $R_5$ respectively.

An npn-type transistor is indicated $T_3$ and has its base connected to the pin 10 of IC, its emitter connected to earth and its collector connected to the pin 11 of IC. The latter pin represents the enabling input of the integrated circuit: when a high-level signal is present at this input, the integrated circuit is enabled and supplies current to the motor M.

A pnp-type transistor is indicated $T_4$ and has its base connected to the pin 2 of IC, its emitter connected to the voltage supply $V_B$ and its collector connected to the base of $T_3$.

As stated above, the integrated device IC comprises a full-bridge-type driving circuit whose upper and lower vertices are connected to the pins 2 and 10.

If, in operation, there were an accidental short circuit between one of the terminals of the motor M and earth or the voltage supply $V_B$, according to the direction of the current in M, there would be a sudden increase in the current flowing in $R_4$ or $R_5$. An increase in current in $R_4$ or $R_5$ causes the application to the base of $T_3$ of a voltage which is at least sufficient to cause it to conduct, whereby the enabling pin 11 or IC is "forced" to the "low" level. The operation of IC is therefore blocked.

The same occurs in the event of an accidental short-circuit between the pins 3 and 4 of IC.

The resistors $R_4$ and $R_5$ and the transistors $T_3$ and $T_4$ therefore together constitute a protection circuit adapted to neutralise any enabling signal provided by the comparator circuit F when an accidental short-circuit takes place between one terminal of the motor and the voltage source or earth.

In normal operation, when the duty cycle of the signal S is substantially different from 50%, the comparator circuit F applies an enabling signal through $A_4$ to the pin 11 of IC. Moreover, two square-wave signals, in phase and in counterphase with S respectively, are applied to the pins 5 and 7 (the control inputs) of IC. In fact, between the input terminal i and the pin 7 of IC, the signal S is inverted in $T_1$, as well as being amplified, whilst the signal S is inverted twice between the terminal i and the pin 5 (in $T_1$ and $T_2$ respectively).

The integrated circuit IC is therefore piloted in its "two-phase chopping" operation.

With reference now to the input buffer circuit D, the values of $R_1$, $R_2$ and $C_1$ are conveniently selected so that, if the connection between the input terminal i and the electronic control unit ECU is broken accidentally, the transistor $T_1$ is blocked and stops the operation of IC. This prevents the throttle valve B from being able to open completely under such circumstances.

## Claims

1. A circuit for controlling a direct-current motor (M) by means of a square-wave signal (S) whose duty cycle is variable such that the magnitude and sign of its variations from a predetermined value (50%) are indicative of the value and the sign of the desired rate of rotation of the motor (M), characterised in that it comprises:
an input terminal (i) for the control signal (S) with a variable duty cycle,
an integrator circuit (I) connected to the input terminal (i),
a comparator circuit (F) for providing an enabling output signal when the amplitude of the signal provided by the integrator circuit (I) is substantially different from the value which corresponds to the predetermined value (50%) of the duty cycle of the control signal (S), and
a circuit (E) for controlling the current supply of the motor (M), which has at least one control input (e) connected to the input terminal (i) and an enabling input ($e_1$) connected to the output of the comparator circuit (F), and is adapted to supply the motor (M) with a current which flows in one direction or in the opposite direction when the signal provided by the at least one control input (e) is at a high level or at a low level.

2. A circuit according to Claim 1, characterised in that the comparator circuit (f) comprises:
first and second comparators ($A_1$, $A_2$) arranged to compare the amplitude of the signal provided by the integrator circuit (I) with first and second threshold levels respectively, and
a logic circuit (A, M) which is connected to the first and second comparators ($A_1$, $A_2$) and is adapted to provide an enabling signal when the amplitude of the signal of the integrator (I) is greater than the higher threshold level or is less than the lower threshold level.

3. A circuit according to Claim 1, characterised in that the circuit (E) for controlling the current supply comprises a driving circuit (IC) of the full-bridge type between a voltage supply and earth.

4. A circuit according to Claim 3, characterised in that it includes a protection circuit ($R_4$, $R_5$, $T_4$, $T_3$) for neutralising the enabling signal provided by the comparator circuit (F) when there is a short-circuit between a terminal of the motor (M) and the voltage supply ($V_B$) or earth, or between the terminals of the motor (M).

5. A circuit according to any one of the preceding claims, characterised in that is also includes an input buffer circuit (D) including a transistor ($T_1$) having its base connected to the input terminal (i) and its output connected to the input of the integrator circuit (i) and of the circuit (E) for controlling the current supply to the motor, the input buffer circuit (D) including blocking means ($R_1$, $R_2$, $C_1$) for preventing the operation of the circuit (E) for controlling the current supply to the motor in the event of the absence of a signal at the input terminal (i).

## FIG. 1

ECU

P

C
CONTROL CIRCUIT

M

i

S

A

B

## FIG. 3

C

E
DRIVER CIRCUIT

e

M

i

INPUT BUFFER

D

e1

I    INTEGRATOR

F

COMPARATOR

C

## FIG. 2

S

$\Delta 1$    $\Delta 2$

t

T    T    T    T

EP 0 366 620 A1

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 508 078 (TAKEUCHI et al.) * Fig. 1,5,7; col. 2, 1. 55 - col. 5, 1. 68 * | 1 | F 02 D 11/10 H 02 P 8/00 |
| A | | 2 | |
| Y | US-A-4 641 622 (MURAKAMI) * Front page; fig. 4,5; col. 3, 1. 64 - col. 6, 1. 26 * | 1 | |
| A | | 4,5 | |
| Y | US-A-4 765 295 (ISHIKAWA et al.) * Front page * | 1 | |
| A | US-A-4 523 565 (OMITSU) * Whole document * | 1-5 | |
| A | FR-A-2 549 899 (R. BOSCH et al.) * Front page; p. 1, 1. 24 - p. 3, 1. 26; fig. 1 * | 1,2,4 | |
| A | US-A-4 612 615 (MURAKAMI) | | TECHNICAL FIELDS SEARCHED (Int. Cl.5) |
| A | FR-A-2 569 231 (R. BOSCH) | | F 02 D H 02 P |
| A | FR-A-2 385 553 (V.D.O. ADOLF SCHINDLING) | | |
| A | EP-A-0 285 868 (SIEMENS) | | |

The present search report has been drawn up for all claims

| Place of search | Date of completion of the search | Examiner |
|---|---|---|
| THE HAGUE | 01-01-1990 | LEROY C.P. |

EPO FORM 1503 03.82 (P0401)